# EUROPEAN PATENT APPLICATION

(11) **EP 1 632 748 A2**
(43) Date of publication of application: **08.03.2006**
(21) Application number: 05255340.1
(22) Date of filing: 01.09.2005
(51) Int. Cl.: G01C 15/00

(54) **Laser level**

(30) Priority: 02.09.2004 HK 04106597
(71) Applicant: Choon Nang Electrical Appliance MFY. Ltd., Hong Kong (HK)
(72) Inventor: Lui, Tat Nin 11th floor,, Aberdeen, Hong Kong SAR (CN); Fong, Scott Sze Kok, 11th Floor, Aberdeen, Hong Kong SAR (CN); Yang, Lin C/o Wang Fat Metal Plastic & Elect. Man., Long Gang District, 518173, Shen Zhen (CN)
(74) Representative: Jenkins, Richard Gavin

(57) **Abstract**

A laser level device (10) includes a cold formed metallic mounting plate (15), a spirit level tube (16/17) fixed against the mounting plate (15), and a laser emitter (22) fixed against the mounting plate (15).

## Description

The present invention relates to laser levels.

### BACKGROUND OF THE INVENTION

More particularly, although not exclusively, the invention relates to a hand-held device emitting a in-horizontal plane or in-vertical plane scanning laser beam for projection upon a vertical surface to indicate a horizontal or vertical line upon the surface.

It is known to project a laser beam from a hand-held device upon a vertical surface to indicate a vertical or horizontal line. Such lines are useful for aligning picture hooks on an interior wall for example.

Known handheld devices used to perform the above task comprise one or more spirit level tubes and a laser beam emitter mounted upon a cast or moulded mounting plate. The manufacturing process involved provides for limited alignment accuracy between the laser beam emitter and the spirit level tubes. As a result, surface and/or edge precision machine finishing upon the mounting plate is needed to avoid inaccurate projection of the laser beam relative to the spirit level tubes.

### OBJECTS OF THE INVENTION

It is an object of the present invention to overcome or substantially ameliorate the above disadvantage and/or more generally to provide an improved laser level.

### SUMMARY OF THE INVENTION

According to the invention, there is provided a laser level device comprising:
a cold formed metallic mounting plate,
a spirit level tube fixed against the mounting plate, and
a laser emitter fixed against the mounting plate.

Preferably, the laser level device further comprises a moulded plastics casing, the mounting plate is fixed within the casing and the spirit level tube is pressed against the mounting plate by the casing.

Preferably, the laser level device further comprises a moulded plastics casing, and the plastics casing comprises a number of internal upstanding posts against which the mounting plate is supported.

It is further preferred that the mounting plate comprises a slot narrower than the spirit level tube and into which the spirit level tube partially fits.

Preferably, the laser level device comprises a pair of said spirit level tubes mutually offset from one another by 90 degrees.

More preferably, the laser level device includes two said spirit level tubes with respective said slots, and the mounting plate comprises three angularly offset portions, a first of which includes one of the slots, a second of which includes the other slot, and a third of which comprises an aperture through which the laser beam emitter extends.

In a preferred embodiment, the laser level device further comprises a moulded plastics casing in which the mounting plate is mounted and an illuminator within the casing for illuminating the spirit level tube.

More preferably, the laser level device comprises a pair of said spirit level tubes mutually offset from one another by 90 degrees, wherein the illuminator is arranged to illuminate both of said spirit level tubes.

It is preferred that the laser level device further comprises one or more laser trim screws upon the mounting plate and bearing against the laser emitter to calibrate the angle at which the laser emitter emits a laser beam.

More preferably, there are two or more said trim screws offset from one another by 90 degrees.

Preferably, the laser emitter is adapted to emit an angularly oscillating in-plane scan of laser light.

### BRIEF DESCRIPTION OF DRAWINGS

The invention will now be further described, by way of example only, with reference to the accompanying drawings , in which:

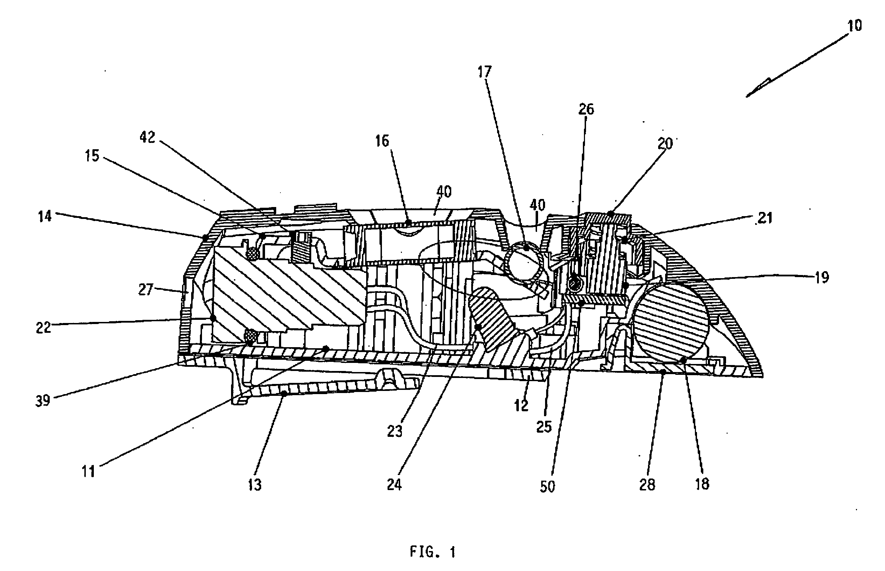

Figure 1 is a cross-sectional side view of an embodiment of a laser level device in accordance with the invention;

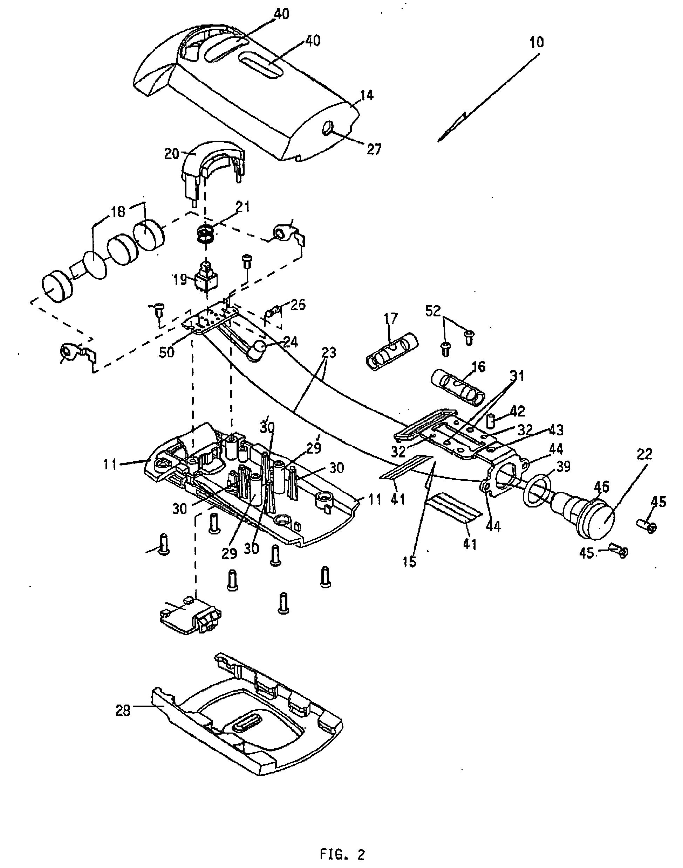

Figure 2 is an exploded perspective view of the level device of Figure 1;
Figure 3 is a side view showing internal components of the level device of Figures 1 and 2, with its top cover removed;

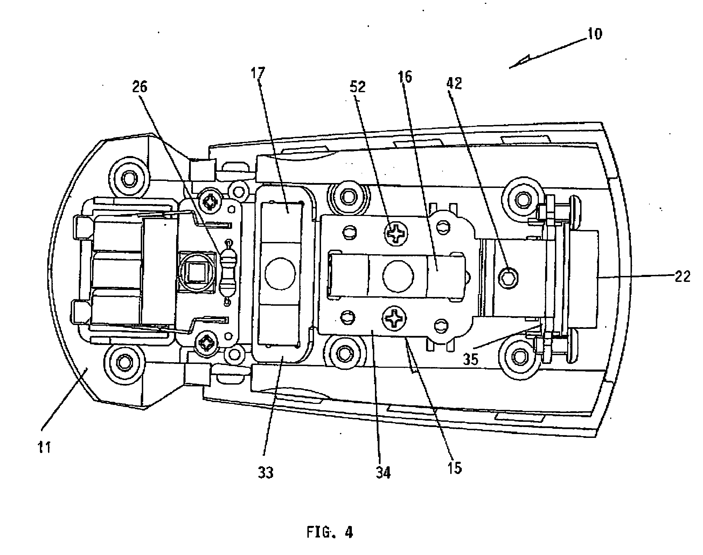

Figure 4 is a top plan view of the components depicted in Figure 3;
Figure 5 is a side view of a laser/level assembly depicted in Figure 3;
Figure 6 is a top plan view of the laser/level assembly of Figure 5;
Figure 7 is an inverted cross-sectional side view of the laser/level assembly of Figure 6, taken along line VII-VII;
Figure 8 is a perspective view of the laser/level assembly of Figures 5 to 7;
Figure 9 is a front end view of the laser/level assembly of Figure 8;
Figure 10 is a bottom plan view of the laser/level assembly of Figure 5;
Figures 11, 12, 13 and 14 are top plan, perspective, side and end views respectively of a mount of the laser/level assembly of Figure 5; and
Figure 15 is an end view of the internal components of Figure 3.

### DETAILED DESCRIPTION OF PREFERRED EMBODIMENT

In the accompanying drawings there is depicted a laser level device 10 embodying the subject invention. The device 10 includes a moulded plastics base 11 having attached to it a base plate 12 from which there extends a clip 13 by which the device 10 may be attached to a user's belt. Covering the base 11 is a moulded plastics casing 14 within which there is mounted a metallic mounting plate 15. The mounting plate 15 is made from plate metal such as steel or brass that is cold formed into the shape depicted in the drawings. The cold forming process may be stamping, forging, rolling and bending, or other low-temperature plastic deformation techniques.

A first spirit level tube 16 is fitted upon the mounting plate 15, and a second spirit level tube 17 offset from the first spirit level tube 16 by 90 degrees is also fitted upon the mounting plate 15. Each spirit level tube 16/17 has an air bubble within a coloured liquid as known.

A battery or series of batteries 18 is located within the casing 14 and an electric switch 19 is activated by a pushbutton 20. A battery cover 28 encloses the battery or batteries 18.

A coil spring 21 biases the pushbutton 20 and switch 19 into an open-circuit configuration.

There is a laser emitter 22 mounted upon the mounting plate 15 connected by wires 23 via the switch 19 to the battery 18. The laser emitter 22 emits a laser beam through an aperture 27 at the front of the casing 14. An in-plane laser beam is to be angularly oscillated by the emitter 22. The plane of the beam is supposed to be normal to the vertical surface against which the device 10 is to be used.

An LED 24 is connected by wires 25 via the switch 19 to the battery 18. The LED 24 back-illuminates both the first and second spirit level tubes 16 and 17 through respective translucent diffusing films 41. A resistor 26 is in circuit with the switch 19. The switch 19 and resistor 26 are mounted upon a PCB 50.

The casing 14 includes a pair of oblong openings 40 through which the respective spirit level tubes 16 and 17 are visible.

The base 11 includes a pair of upstanding screw posts 29, each being flanked by a pair of support posts 30. The mounting plate 15 includes a pair of screw holes 31 through which screws 52 pass to secure the mounting plate 15 to the screw posts 29. Upper tabs of the support posts 30 extend into corresponding holes 32 of the mounting plate 15 to stabilise the mounting plate 15 upon the base 11.

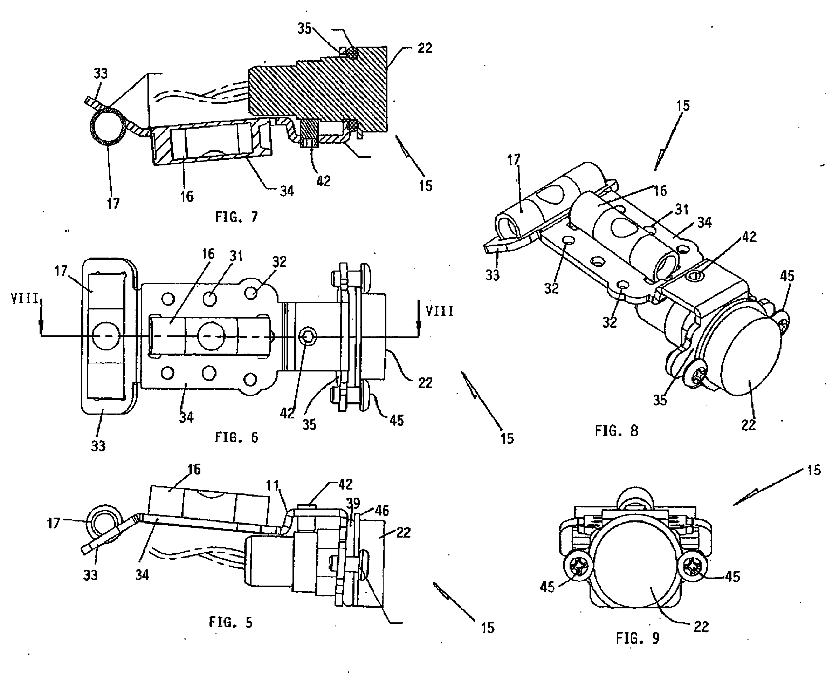

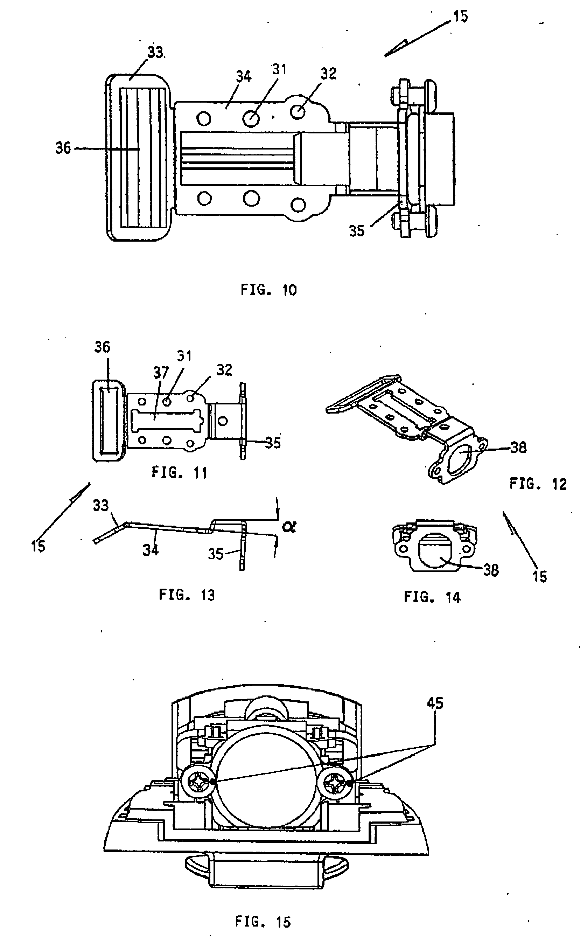

As best depicted in Figures 5 to 8, the mounting plate 15 includes three major angularly offset portions 33, 34 and 35. Portion 33 extends from portion 34 at an obtuse angle, whereas portions 35 is inclined or offset from portion 34 at an angle of approximately 95 degrees. Moreover, the angle α designated in Figure 13 is about 5 degrees. Portion 33 includes a slot 36 into which the second spirit level tube 17 partially fits. Portion 34 includes a slot 37 into which the first spirit level tube 16 is likewise located. Portion 35 includes an aperture 38 through which the laser emitter 22 extends and is fixed. An O-ring 39 bears against the periphery of the aperture 38 and against the back of an annular flange 46 at the front portion of the laser emitter 22. The O-ring 39 provides for resilient mounting of the laser emitter 22 upon the mounting plate 15 for adjustment purposes to be described.

When the casing 14 is fitted upon the base 11, the spirit level tubes 16 and 17 are tightly fitted between the openings 40 and the slots 36 and 37. To this end, the openings 40 are narrower than the diameter of the spirit level tubes 16 and 17.

A first adjustment screw 42 is fitted within a tapped aperture 43 and bears against an upper surface of the laser emitter 22. Adjustment of the screw 42 aligns the laser emitter 22 by moving it slightly upon the O-ring 39. This adjustment provides in-plane calibration of the laser beam emitted through the aperture 27 by the laser emitter 22.

The portion 35 of the mounting plate 15 has a pair of tapped apertures 44, and a corresponding pair of adjustment screws 45 extends through these so that their heads bear upon the front surface of the annular flange 46 of the laser emitter 22. By turning these screws 45, the emitted planar laser beam can be adjusted left and right as the flange 46 compresses against the O-ring 39.

The adjustment screws 42 and 45 are set in the factory and need not be readjusted.

In use, the base 11 including the clip 13 held against a wall and aligned so that the laser beam emitted by the laser emitter 22 will either be roughly horizontal or roughly vertical. Appropriate adjustment of the position of the device 10 whilst viewing the air bubble within a respective one of the spirit level tubes 16 and 17 is then made, whereupon the pushbutton 20 is depressed and a laser beam emitted.

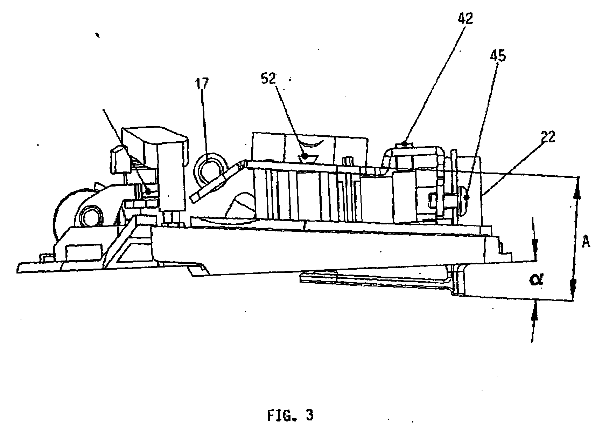

Inherent compensation for the interaction of the clip 13 with the wall is made by virtue of the angular design of the apparatus as illustrated in Figure 3. That is, the angle α depicted in Figure 3 corresponds with the angle α mentioned earlier and as shown in Figure 13. The two planes indicated as A in Figure 3 are parallel to each other. One of these planes corresponds with portion 34 of the mounting plate 15 and the other plane corresponds with a flat surface upon which the apparatus 10 bears in use.

It should be appreciated that modifications and alterations obvious to those skilled in the art are not to be considered as beyond the scope of the present invention. For example, the spirit level tubes 16 and 17 may be held against the mounting plate 15 by clips or any other means not associated with the casing 14.

## Claims

1. A laser level device comprising:
a cold formed metallic mounting plate,
a spirit level tube fixed against the mounting plate, and
a laser emitter fixed against the mounting plate.

2. The laser level device as claimed in Claim 1, further comprising a moulded plastics casing, **characterized in that** the mounting plate is fixed within the casing and the spirit level tube is pressed against the mounting plate by the casing.

3. The laser level device as claimed in Claim 1, further comprising a moulded plastics casing, **characterized in that** the plastics casing comprises a number of internal upstanding posts against which the mounting plate is supported.

4. The laser level device as claimed in any one of Claims 1 to 3, **characterized in that** the mounting plate comprises a slot narrower than the spirit level tube and into which the spirit level tube partially fits.

5. The laser level device as claimed in any one of Claims 1 to 3, **characterized in** comprising a pair of said spirit level tubes mutually offset from one another by 90 degrees.

6. The laser level device as claimed in Claim 5, **characterized in** including two said spirit level tubes with respective said slots, wherein the mounting plate comprises three angularly offset portions, a first of which includes one of the slots, a second of which includes the other slot, and a third of which comprises an aperture through which the laser beam emitter extends.

7. The laser level device as claimed in any one of Claims 1 to 6, **characterized in** further comprising a moulded plastics casing in which the mounting plate is mounted and an illuminator within the casing for illuminating the spirit level tube.

8. The laser level device as claimed in Claim 7, **characterized in** comprising a pair of said spirit level tubes mutually offset from one another by 90 degrees, wherein the illuminator is arranged to illuminate both of said spirit level tubes.

9. The laser level device as claimed in any one of Claims 1 to 8, **characterized in** further comprising one or more laser trim screws upon the mounting plate and bearing against the laser emitter to calibrate the angle at which the laser emitter emits a laser beam.

10. The laser level device as claimed in Claim 9, **characterized in that** there are two or more said trim screws offset from one another by 90 degrees.

11. The laser level device as claimed in any one of Claims 1 to 10, **characterized in that** the laser emitter is adapted to emit an angularly oscillating in-plane scan of laser light.
